# EUROPEAN PATENT SPECIFICATION

(11) **EP 2 094 749 B1**
(45) Date of publication and mention of the grant of the patent: **22.06.2011**
(21) Application number: 07862532.4
(22) Date of filing: 05.12.2007
(51) Int. Cl.: C08F 255/00, C08L 101/00, C08L 51/00, C09D 151/00, C09K 3/30

(54) **WATERBORNE COATING COMPOSITIONS**
WÄSSRIGE BESCHICHTUNGSZUSAMMENSETZUNGEN
COMPOSITIONS D'ENROBAGE À BASE D'EAU

(30) Priority: 07.12.2006 US 869011 P
(43) Date of publication of application: 02.09.2009
(73) Proprietor: The Sherwin-Williams Company, Cleveland, OH 44115 (US)
(72) Inventor: PERUMAL, Pillai T., Avon Lake, OH 44012 (US)
(74) Representative: Heinemann, Monica
(86) International application number: PCT/US2007/024891
(87) International publication number: WO 2008/073248

(56) References cited:
- WO-A-00/18827
- WO-A-2004/014858
- US-A- 5 580 933
- US-A- 5 603 939
- US-A1- 2006 235 160

## Description

Plastics, such as thermoplastic polyolefins (TPO) and reaction injected molding urethane (RIM), are frequently utilized as parts in the automotive industry and in other applications because of their relatively low cost, moldability, and superior resistance to solvents and moisture.

The plastics are, however, frequently difficult to paint due to one or more of their physical and chemical characteristics, such as their relatively non-polar surface (especially for polyolefins like polypropylene, polyethylene, and ethylene propylene diene copolymer,) and the surface tension, roughness and flexibility of the cured plastic itself. These difficulties can be especially true when using water dispersible coatings since it is often difficult for a relatively high surface tension water dispersible coating to adequately wet a plastic substrate like a polyolefin. Sometimes the plastic substrates are treated with a flame, corona or gas plasma treatment, or coated with a tie coat or adhesion promoter but this adds an additional manufacturing step. Some tie coats and adhesion promoters utilize halogenated, especially chlorinated, polyolefins, but the halogenated polyolefins are relatively expensive and are costly if used in large amounts. Additionally, the halogenated polyolefins are often relatively high molecular weight polymers, and they often are relatively insoluble in many non-aromatic solvents. These characteristics can make it difficult to minimize VOC (Volatile Organic Content) of the coatings when incorporating halogenated polyolyfins.
WO 00/18827 describes stable aqueous based dispersions of an acrylic modified chlorinated polyolefin for use as coatings.
US 2006/0235160 A1 is directed to a water-borne resin composition for polyolefin obtained by graft polymerizing polypropylene chloride resin and an acryl monomer. The composition may be applied as a water-borne paint composition.
US 5,603,939 A relates to a film-forming composition containing at least one grafted chlorinated copolymer resulting from the grafting of a chlorinated polyolefin with acrylic, styrene and/or vinyl type unsaturated monomers. The composition is useful in hair setting formulations or else in the preparation of nail varnish.
In US 5,580,933 A, chlorinated polyolefins are grafted with unsaturated monomers such as acrylic, styrene, vinyl in the presence of AIBN. The resins prepared by said grafting can be used as solutions to produce films and in particular in the manufacture of compositions used for pigmented or unpigmented coatings such as paints, inks, and adhesive primary coatings.
WO 2004/014858 A is directed to a pressurized paint product that includes an aerosol paint composition disposed in a container. The aerosol paint composition includes volatile organic solvents, an acrylic modified alkyd resin, an acrylic chlorinated polyolefin resin, propellant, and a colorant.

In one useful embodiment, the present invention relates to water reducible coating compositions, which can be applied to a variety of substrates, including plastic substrates, by any of a variety of methods such as brushing, rolling, spraying, curtain coating, or other application method, including aerosol spray from a sealed and pressurized container. Many conventional paint compositions, and particularly aerosol paints, adhere poorly to many plastic substrates. The coatings of this invention, however, can be applied to a variety of substrates including wood, metal, and fabric and will also adhere well to many hard to coat substrates such as plastics, including polyolefins, polyphenylene oxide, PVC, BMC, SMC, and polystyrene. The coatings of this invention utilize a water reducible polymer readily obtained by the graft copolymerization of a halogenated, normally chlorinated, polyolefin and unsaturated monomers.

For many application methods, the water reducible versions of the coatings of this invention can be applied at relatively low levels of volatile organic compounds (VOC). As used herein, the term VOC shall mean a volatile organic solvent capable of vaporizing at atmospheric pressure and a temperature in a range from 2°C (35°F) to 60°C (140°F). For applications where it is desirable to minimize the amount of organic solvent present it is useful to prepare the coatings of this invention wherein the organic solvent is present at a level to provide a VOC of less than 150 grams per liter. Many of the coatings of this invention can be formulated to have a convenient application viscosity of less than 100 KU (Krebs Units), or even less than 90 KU at such a low VOC level. For many of the coatings within this invention it is convenient to obtain these relatively low viscosities by incorporating the chlorinated polyolefin (CPO) at a level of about 15% or less and sometimes about 10% or less of the total weight solids of the graft copolymer.

In one aspect, this invention relates to an aqueous polymer solution comprising : (i) water; (ii) an acid functional polymer comprising the reaction product obtained by graft copolymerizing of:
(a) from 1 to 19% by weight of at least one chlorinated polyolefin;
(b) from 1 to 20% by weight of an unsaturated acid or anhydride;
(c) from 1 to 40%, and sometimes 10 to 40%, styrene;
(d) from 21 to 97% by weight of at least one other unsaturated monomer copolymerizable with the unsaturated acid or anhydride;
wherein the percentages are based upon the total combined weight of the chlorinated polyolefin and all unsaturated monomers; and (iii)
a sufficient amount of a neutralizing agent to provide a stable dispersion of the polymer in water. Another aspect involves coatings which utilize these polymers. Further aspects, features, and advantages of the present invention will become better understood with regard to the following description, examples, appended claims and accompanying drawing.

### DESCRIPTION OF THE DRAWINGS

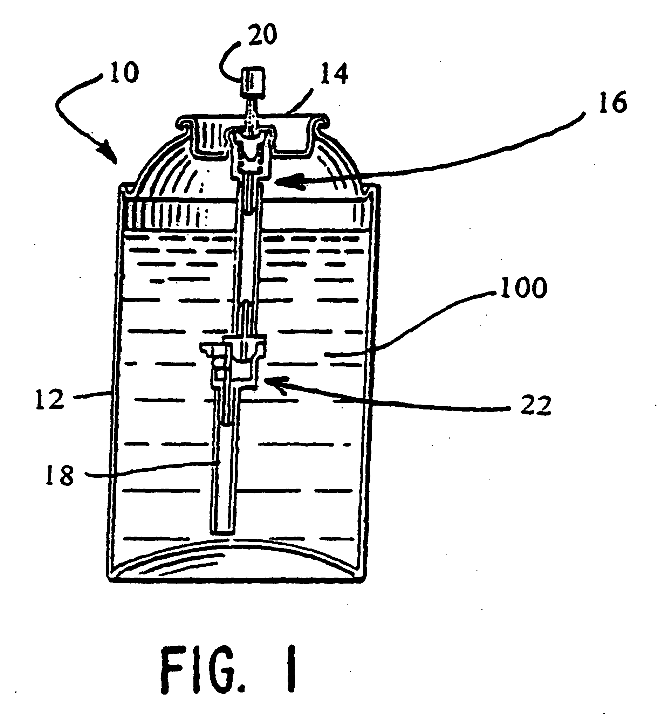

Figure 1 shows a schematic of a representative aerosol container charged with an aerosol paint composition prepared in accordance with this invention. In preparing an aerosol paint composition, the water reducible coating of this invention is added to a container, such as container 10 shown in Fig. 1, and then the propellant is added to form the aerosol paint composition.

Referring now to Fig. 1, the container 10 comprises a can 12, to which a valve cup 14 is secured. A valve assembly 16 with a dip tube 18 connected thereto is secured to the valve cup 14. The dip tube 18 extends into the interior of the can 12 and is in contact with the aerosol paint composition, which is designated by the numeral 100. The can 12 may typically be composed of aluminum or tin plated steel. If desired the can may be lined or coated to minimize corrosion while in contact with the water reducible coatings. The valve cup 14 may be sealed to the can 12 and the propellant charged through the valve assembly 16, or the can 12 may be charged with the propellant under the valve cup 14, and then the valve cup 14 sealed to the can 12. An actuator 20 is then connected to the valve assembly 16.

Various valves, dip tubes and actuators may be used to spray the aerosol paint composition. For many applications, the dip tube 18 is a standard dip tube having a diameter of about 0.373 cm (0.147 inches). The valve assembly 16 may be either a "female" aerosol valve or a "male" aerosol valve. Examples of "female" aerosol valves that may be used in the present invention are disclosed in U.S. Pat. Nos. 3,033,473; 3,061,203; 3,074,601; 3,209,960; and 5,027,985. Examples of "male" aerosol valves that may be used in the present invention are disclosed in U.S. Pat. Nos. 2,631,814, and 4,572,406. For some applications, the valve assembly 16 is a "female" valve with a spray controller 22 having a construction as disclosed in U.S. Patent No. 4,572,406, which is hereby incorporated by reference. The spray controller 22 permits the aerosol paint composition 100 to be dispensed when the container 10 is inverted.

### WATER REDUCIBLE COATING COMPOSITIONS AND COMPONENTS

### 1. Graft copolymers of unsaturated monomers with chlorinated polyolefins

The polymers of this invention are conveniently obtained by the graft polymerization of an unsaturated acid or anhydride and at least one other unsaturated monomer copolymerizable with the unsaturated acid or anhydride onto at least one chlorinated polyolefin. Furthermore at least 1%, and sometimes at least 10%, and sometimes between 10 and 40%, of the total amount of CPO and copolymerizable monomer(s) of styrene are provided for graft copolymerization.

Chlorinated polyolefins (CPOs) are well known in the art and include, representatively, chlorinated polypropylene, chlorinated polybutene, and chlorinated polyethylene. The CPOs can be prepared by any method known in the art. For example, the CPO can be prepared by dissolving the polyolefin in a suitable solvent and then blowing chlorine gas into the solution, usually in the presence of a radical catalyst. Typically, for many commercial products, chlorination levels of at least 10% by weight, and frequently 15 to 50% by weight are achieved. The CPOs can also have some acid functionality, generally incorporated by reaction of an acid or anhydride onto the polyolefin. For some applications of this invention, it can be useful to utilize CPOs having a number average molecular weight less than about 50,000. In other applications, it can be useful to utilize a CPO having a number average molecular weight less than about 30,000. Number average molecular weight is typically determined relative to a polystyrene standard.

The graft copolymers useful in this invention are conveniently prepared by admixing the ethylenically unsaturated monomers and CPO in the presence of a polymerization initiator such as t-butyl peroxybenzoate, benzoyl peroxide, di-tert-butyl peroxide and/or azobisisobutyronitrile.

Suitable monomers for copolymerization with the CPO include (meth)acrylic monomers and vinyl aromatic monomers. Representative vinyl aromatic monomers include styrene, alpha methyl styrene or other lower alkyl styrene, chlorostyrene, vinyl toluene, vinyl naphthalene, and divinyl benzene.

Representative copolymerizable acrylic monomers include any compounds having acrylic functionality, such as alkyl (meth)acrylates, (meth)acrylic acids, acrylamides and acrylonitrile. Typically, the alkyl (meth)acrylate monomers (commonly referred to as "alkyl esters of (meth)acrylic acid") will have an alkyl ester portion containing from 1 to 12, and generally 1 to 8, carbon atoms per molecule. Suitable alkyl (meth)acrylate monomers include, for example, methyl (meth)acrylate, ethyl (meth)acrylate, butyl (meth)acrylate, propyl (meth)acrylate, 2-ethyl hexyl (meth)acrylate, cyclohexyl (meth)acrylate, decyl (meth)acrylate, isodecyl (meth)acrylate, benzyl (meth)acrylate, isobomyl (meth)acrylate, neopentyl (meth)acrylate, 1-adamatyl methacrylate and various reaction products such as butyl, phenyl, and cresyl glycidyl ethers reacted with (meth)acrylic acid, hydroxyl alkyl (meth)acrylates, such as hydroxyethyl and hydroxypropyl (meth)acrylates, and amino (meth)acrylates. The term "(meth)acrylate" is meant to include acrylates and methacrylates. Other copolymerizable unsaturated monomers, including vinyl compounds such as vinyl acetate, or vinyl versatate can also be utilized. Monomers capable of latent crosslinking such as diacetone acrylamide can also be used.

It is useful to incorporate sufficient acid functionality into the graft copolymer to provide an acid value high enough to provide water solubility when neutralized with a neutralizing agent. Suitable unsaturated acids and anhydrides which could be copolymerized into the graft copolymers include the unsaturated derivatives of inorganic acids such as AMPS (acrylimidomethylpropane sulfonic acid, available from Lubrizol), and phosphoric acid derivatives such as hydroxy ethyl methacrylate phosphate or the phosphate ester of 3-hydroxy propyl methacrylate, as.well as unsaturated organic acids such as (meth)acrylic acid, ethacrylic acid, alpha-chloroacrylic acid, alpha-cyanoacrylic acid, crotonic acid, beta-acryloxy propionic acid, beta-styryl acrylic acid, maleic anhydride, and the unsaturated acids and anhydrides taught in US patents 5,863,998, 5,633,327, 5,444,122, and 5,405,973. For some applications it is useful to provide a final acid value of at least about 10, or for some applications at least 20, or, for some applications, at least about 40, or, for some applications, at least 60 for the graft copolymer.

The acid functional graft copolymers can easily be made water dispersible, by admixing the polymers with an amount of a neutralizing agent, such as an amine or other base, sufficient to provide the desired degree of water dispersiblity. Representative useful amines include ammonia, and alkyl or alkanol amines such as dimethyl benzyl amine, dimethylethanol amine, diisopropyl amine, and triethyl amine. It is only necessary to incorporate sufficient base to provide the desired level of water miscibility and stability. For some water reducible applications, it will be useful to add enough base to theoretically neutralise at least 40% of the acid groups of the polymer.

The graft copolymers can be conveniently prepared by admixing the monomers and the CPO in the presence of a suitable initiator under suitable graft copolymerization conditions. It is frequently useful to incorporate the CPO into the reaction mixture as a solution in a suitable solvent such as toluene or xylene. The reaction temperatures will typically be at least about 116°C (240°F), and may range up to about 177°C (350°F). It is often useful to gradually admix the reactants into a heated solvent solution. For some production of the graft copolymer, it can be useful to prepare a premix of a solvent solution of the CPO and some, or all, of any unsaturated vinyl aromatic monomers to ensure solubility of the CPO and to minimize any requirement for solvent in the reaction mixture. Additionally, for some embodiments of this invention it is desirable to minimize the level of CPO in the final graft copolymer to minimize final viscosity and reduce the requirement for additional solvents. For many low VOC formulations, it can be useful to incorporate the CPO at a level of 1 to 15%, 1 to 10%, 1 to 6%, or even 1 to 4%, of the total combined weight of the chlorinated polyolefin and all copolymerizable monomers in the graft copolymer.

The graft copolymers of this invention are useful in a variety of applications, including their use as components of coating compositions. The water dispersible paint compositions of the present invention may include other optional ingredients, such as other water-reducible polymers, crosslinkers, pigments, surfactants and dispersants, rheology modifiers, anti-skinning agents, drying agents, light stabilizers and ultraviolet light absorbers, and solvents.

### 2. Water-Reducible Film-Forming Polymers

If desired, other water reducible film forming polymers such as latex polymers and water reducible acrylics, polyesters (including alkyds), and polyurethanes (including polyurethane dispersions) can optionally be combined with the graft copolymers in water reducible coating formulations. Typically, these additional polymers, if incorporated, may be present at a level of 1 to 99% by weight solids of the combined weight of the graft copolymer and the additional polymer. For some applications it is useful to incorporate from 10 to 60% by weight solids of the combined weight of the additional water reducible film-forming polymer and the graft copolymer into the coating.

As used herein, the term "film-forming polymer" means that the polymer can form a continuous film upon evaporation of all solvent or carrier and/or upon cure of the polymer. As used herein, the term "water reducible" is meant to include all polymers which can be stabily dispersed in water and is intended to include water-soluble polymers, dispersions, emulsions, and latices wherein the volatile content is, or can be, predominantly water.

Water-reducible film-forming polymers are well known in the art and can be prepared by any of the methods known in the art. Water-reducible polymers include those materials with sufficient hydrophilic and/or ionic groups (such as acid or amine groups) on the polymer to provide water solubility.

One common approach to producing water-soluble polymers is by the condensation reaction of reactants having a stoichiometric excess of ionic groups, such as acid groups which can subsequently be neutralized to provide water solubility. Water-reducible polyesters, polyureas, polyurethanes and other polymers can be prepared in this manner.

For example, the condensation polymerization reaction of reactants having a stoichiometric excess of acid or anhydride groups with reactants having hydroxyl, amine and/or epoxy functionality can produce acid functional polymers which can be neutralized with a base, such as an amine to provide water solubility.

Another method well known in the art to produce water-reducible polymers is by the free radical polymerization of unsaturated groups having acid functionality such as acrylic acid, methacrylic acid, or others, with other unsaturated monomers followed by neutralization of the ionic groups to provide water solubility.

Many other methods for producing water-reducible polymers are also known in the art. Representative commercially available water-soluble resins include Kelsol^{®} DV-5862, a water-reducible alkyd from Reichhold Chemicals and Rezimac^{®} WR 73-7331, a water-reducible epoxy resin from Eastman Chemical (formerly McWhorter Chemical). Other water-reducible film-forming polymers include the latex resins. Representative examples include styrene butadiene latices, polyvinyl acetate latices, acrylic latices, and many others. These types of polymers are frequently prepared by emulsion polymerization wherein the reactive monomers and appropriate initiators are emulsified in water in the presence of emulsifying agents to provide a stable dispersion of polymer particles in water. For some applications of this invention, it is especially useful to utilize latex resins which are more hydrophobic. These types of latices are representatively prepared by utilizing monomers that are more hydrophobic, and by using surfactants or emulsifying agents which are less water sensitive or which can be incorporated directly into the latex polymer itself.

Representative examples of some latices useful in the practice of this invention include the latex polymers taught in PCT application PCT/US99/23428 (WO 00/22016), entitled Latex Polymer Compositions; and U.S. 5,739,196. Representative commercially available latex resins useful in the practice of this invention include Rhoplex® Multilobe 200 (acrylic latex), Optive® 130 from BASF , Rhoplex® AC-264 (acrylic latex) both from Rohm and Haas Company, and Neocar® 2300 (vinyl versatate based latex), UCAR® 651 (acrylic copolymer), Ultracryl® 701 (acrylic latex), Neocar® 820 (acrylic latex), and Neocar® 7657 and 7658 (hydrophobic acrylic latices) all available from Union Carbide Corporation.

Other representative examples of water-reducible polymers optionally useful in combination with the graft copolymers of this invention include water-reducible acrylic modified polyesters such as taught in US 4,735,995; acid-functional air drying polyurethanes such as taught in US 5,104,737, and polyurethane dispersions such as taught in US 5,310,780 and 5,912,299. For some applications the paint compositions of this invention can optionally incorporate a crosslinking agent reactive with any functional groups pendent on the graft copolymer. For example, if the graft copolymer incorporates pendent hydoxyl groups, crosslinkers such as ureas, melamines, or isocyanates could be utilized. Graft copolymers having pendent acid groups could be used in combination with polyepoxides as crosslinkers. Graft copolymers incorporating diacetone acrylamide could be crosslinked with reactive materials such as adipic dihydrazide. If crosslinkers are incorporated, catalysts for the curing reaction may also be incorporated as is well known in the art. For some crosslinking reactions, such as melamine/hydroxyl reactions, it is typically necessary to cure the coating at elevated temperatures ranging up to 204°C (400°F).

The water-reducible coating compositions of this invention may also incorporate at least one pigment. Representative pigments include, for example, titanium dioxide, carbon black, graphite, ceramic black, lamp black, antimony sulfide, black iron oxide, aluminum pastes, yellow iron oxide, red iron oxide, iron blue, phthalo blue and green, nickel titanate, dianisidine orange, dinitroaniline orange, imidazole orange, quinacridone red, violet and magenta, toluidine red, molybdate orange, and the like. Extender pigments, such as amorphous, diatomaceous, fumed, quartz and crystalline silica, clays, aluminum silicates, magnesium aluminum silicates, talc, mica, delaminated clays, calcium carbonates and silicates, gypsum, barium sulfate, calcium zinc molybdates, zinc oxide, phosphosilicates and borosilicates of calcium, barium and strontium, and barium metaborate monohydrate, can also be incorporated.

Suitable dispersants and surfactants for use in the coatings of this invention can comprise any of the dispersants and surfactants readily available to the coatings industry, including the anionic and nonionic surfactants, soya lecithin, alkyl ammonium salts of fatty acids, amine salts of alkyl aryl sulfonates, unsaturated organic acids, sulfonated castor oil, mixtures of high boiling point aromatic and ester solvents, and sodium salts of aryl sulfonic acid.

Suitable rheology modifiers which optionally can be included in the coatings of this invention representatively include organoclays, fumed silica, dehydrated castor oil organic derivatives, English China Clay; polyamides, polyamide modified alkyds, alkylbenzene sulphonate derivatives, aluminum, calcium and zinc stearates, calcium soyate, and associative thickeners. Suitable solvents for coatings of this invention include solvents which are stabily miscible with the water based coatings and representatively include, alcohols, ethers, esters, glycol ethers, glycol ether esters, and hydrocarbons.

### AEROSOL PAINT COMPOSITIONS

In those instances when it is desired to utilize the coating compositions of this invention as aerosol coating compositions, the aerosol paint composition can be conveniently prepared by combining the water reducible coating composition (described above) with, if desired, additional water and/or solvents, and then incorporating a propellant which can aerosolize the combination.

The propellant is a liquefiable gas having a vapor pressure sufficient to propel the aerosol paint composition from the container. In many cases, the propellant is selected from the group consisting of ethers, saturated hydrocarbons, hydrofluorocarbons (HFC), and mixtures thereof. Representative propellants include dimethyl ether (DME) and diethyl ether; methane, ethane, propane, n-butane, and isobutane; 1,1,1,2-tetrafluoroethane (HFC-134a), 1,1,1,2,3,3,3,-heptafluoropropane (HFC-227), difluoromethane (HFC-32), 1,1,1-trifluoroethane (HFC-143a), 1,1,2,2-tetrafluoroethane (HFC-134), and 1,1-difluoroethane (HFC-152a).

The amount of the propellant present in the aerosol paint composition is at least 10 weight percent and preferably from 10 to 40 weight percent, more preferably from 15 to 25 weight percent of the total weight of the aerosol paint composition. When the propellant is present in an amount of from 15 to 25 weight percent, an initial pressure of between 2.758.10⁵ Pa (40 pounds per square inch) and 4.8265.10⁵ Pa (70 pounds per square inch) is obtained in the container.

The amount of water present in the aerosol paint composition is at least 30 weight percent of the total weight of the aerosol paint composition. Preferably, the amount of water present in the aerosol paint composition is from 30 to 60 weight percent, more preferably from 45 to 55 weight percent of the total weight of the aerosol paint composition.

The amount of polymer resins present in the aerosol paint composition is at least 10 weight percent of the total weight of the aerosol paint composition. For many applications, the amount of polymer resins present in the aerosol paint composition is from 10 to 30 weight percent, more preferably from 15 to 25 weight percent of the total weight of the aerosol paint composition.

The present invention will be better understood by reference to the following examples which are provided for purposes of illustration only. As used herein, unless otherwise indicated, "parts" are "parts by weight", and average particle size was determined using a Malvern NANO-S Particle Size Analyzer.

### Resin Example 1

A reaction vessel equipped with a nitrogen purge, stirrer, and two raw material inlets was charged with 108.8 parts PnB Glycol Ether (propylene glycol mono-n-butyl ether manufactured by The Dow Chemical Company) and heated to 138°C (280°F) and purged with nitrogen. Two separate raw material mixtures, mixture A and mixture B, were prepared.

| MIXTURE A | |
|---|---|
| Raw materials | Parts by Weight |
| methacrylic acid | 102.4 |
| methyl methacrylate | 190.0 |
| 2-ethyl hexyl acrylate | 355.5 |
| t-butyl peroxybenzoate | 22.6 |
| dodecyl mercaptan | 19.0 |

| MIXTURE B | |
|---|---|
| Raw materials | Parts by Weight |
| styrene | 270.5 |
| chlorinated polyolefin¹ | 270.5 |

| | |
|---|---|
| ¹ 50% by weight chlorinated polyolefin in xylene- having 26-32 weight percent chlorine and a number average molecular weight of approximately 24,000, commercially available from Eastman Chemical Company as Eastman CPO 343.3. | |

The mixtures were simultaneously added to the reaction vessel at a rate of 3.8 parts per minute for mixture A and a rate of 3.0 parts per minute for mixture B over a three hour period. The reaction mixture was then held at the 138°C (280°F) temperature for one-half hour and then, for a two hour period, a mixture of 22.6 parts t-butyl peroxybenzoate and 37.6 parts PnB Glycol Ether was added at a rate of 0.5 parts per minute over a two hour period. The reaction mixture was then held at the reaction temperature for 30 additional minutes and then allowed to cool to 82-93°C (180-200°F). The polymer had an acid value of approximately 63.

One thousand parts of the above reaction product at about 82°C (180°F) was admixed with 1,198.6 parts deionized water and 59.3 parts triethyl amine with agitation in a Kady Mill to produce a water reducible resin having a (NVM) of 35.6%, a weight per 3.785 l (gallon) of 3.84 kg (8.47 pounds) and a viscosity of approximately 0.025 Pa·s (23 centipoise) when measured with a Brookfield viscometer using a number 3 spindle at 60 rpm

### Paint Example 1

A coating was prepared by admixing the following materials:

| Raw materials | Parts by Weight |
|---|---|
| Resin Example 1 | 1204.15 |
| defoamer¹ | 2.65 |
| water | 397.17 |
| benzisothiazolone | 0.42 |
| dispersant² | 21.47 |
| surfactant³ | 5.59 |
| defoamer¹ | 2.65 |
| titanium dioxide | 423.50 |
| talc | 110.00 |

| | |
|---|---|
| ¹Byk 024 available from Byk-Chemie Co. ² Tamol 165-A available from Rohm and Haas ³Triton CF-10 | |

| | |
|---|---|
| plasticizer⁴ | 36.12 |
| water | 17.25 |
| latex resin⁵ | 15.00 |
| water | 3.34 |
| triethyl amine 98.5% | 5.50 |

This paint had a VOC of 157.43 grams per liter, a pH of 8.52, an ICI viscosity of 0.289 Pa·s (2.89 poise) and Krebs-Stormer viscosity of 86. When applied by brush over polypropylene substrate it exhibited a 60° gloss of 81, an 85° gloss of 89.8 and excellent adhesion after seven days air dry at room temperature.

### Resin Example 2

A reaction vessel equipped as described in Resin Example 1 was charged with 117.5 parts PnB Glycol Ether and heated to 138°C (280°F) and purged with nitrogen. Two separate raw material mixture, mixture A and mixture B, were prepared.

| MIXTURE A | |
|---|---|
| Raw materials | Parts by weight |
| methacrylic acid | 110.6 |
| methyl methacrylate | 205.2 |
| 2-ethyl hexyl acrylate | 384.0 |
| t-butyl peroxybenzoate | 24.5 |
| dodecyl mercaptan | 10.3 |

| MIXTURE B | |
|---|---|
| Raw materials | Parts by weight |

| | |
|---|---|
| ⁴ Benzoflex B-50 available from Velsicol Company ⁵ Acrysol RM-2020 hydrophobically modified polyurethane thickener available from Rohm and Haas | |

| | |
|---|---|
| styrene | 292.2 |
| chlorinated polyolefin (CPO 343.3) | 73.1 |

The mixtures were simultaneously added to the reaction vessel at a rate of 4.5 parts per minute for Mixture A and 2.0 parts per minute for Mixture B over a three-hour period. The reaction mixture was then held at the 138°C (280°F) temperature for one-half hour and then, for a two hour period, a mixture of 24.5 parts t-butyl peroxybenzoate and 40.7 parts PnB was added at a rate of 0.55 parts per minute over a two hour period. The reaction mixture was then held at 138°C (280°F) for thirty additional minutes and then allowed to cool. The copolymer had an acid value of approximately 63.

Two hundred fifty parts of the above reaction product was admixed with a blend of 337.4 parts deionized water and 18.1 parts triethyl amine which had been heated to 82°C (180°F) in a Kady Mill to form a stable dispersion with an average particle size of 97 nanometers an NVM of 36.3%, a viscosity of 0.07 Pa·s (70 cps) as measured with a Brookfield viscometer using a #3 spindle at 60 rpm at 25°C, a pH of 8.4, a weight per 3.785 l (gallon) of 3,84 kg (8.54 pounds) and a calculated VOC of 141.6 grams/liter.

A similar dispersion was made by combining 400 parts of the above reaction mixture, 539.8 parts deionized water, and 29.0 parts triethyl amine in a Kady Mill to produce a stable dispersion having an average particle size of 108 nanometers, an NVM of 36.90% a pH of 8.4, a viscosity of 0.04 Pa·s (40 centipoise) and a weight per 3.785 l (gallon) of 3.88 kg (8.55 pounds) and a calculated VOC of 141.6 grams per liter.

### Resin Example 3

A reaction vessel equipped as described in Resin Example 1 was charged with 263.8 parts PnP Glycol Ether (propylene glycol n-propyl ether from Dow Chemical) and heated to 138°C (280°F) and purged with nitrogen. Two separate raw material mixtures, mixture A and mixture B, were prepared.

| MIXTURE A | |
|---|---|
| Raw materials | Parts by weight |
| methacrylic acid | 248.2 |
| methyl methacrylate | 460.5 |
| 2-ethyl hexyl acrylate | 861.7 |
| t-butyl peroxybenzoate | 55.0 |
| dodecyl mercaptan | 23.1 |

| MIXTURE B | |
|---|---|
| Raw materials | Parts by weight |
| styrene | 655.6 |
| chlorinated polyolefin (CPO 343.3) | 494.7 |

The mixtures were simultaneously added to the reaction vessel at a rate of 9.2 parts per minute for Mixture A and 6.3 parts per minute for Mixture B over a three-hour period. The reaction mixture was then held at the 138°C (280°F) temperature for one-half hour and then, for a two hour period, a mixture of 55.0 parts t-butyl peroxybenzoate and 91.3 parts PnB was added at a rate of 0.55 parts per minute over a two hour period. The reaction mixture was then held at 138°C (280°F) for thirty additional minutes and then allowed to cool.

Six hundred parts of the above reaction product was admixed with a blend of 712.3 parts deionized water and 40.3 parts triethyl amine in a Kady Mill to form a stable dispersion with an average particle size of approximately 137 nanometers, an NVM of 36.9%, a viscosity of 0.056 Pa·s (56 cps) as measured with a Brookfield viscometer using a #3 spindle at 60 rpm at 25°C, a pH of 8.6, and a weight per 3.785 l (gallon) of 3.86 kg (8.51 pounds).

### Paint Example 2

### Aerosol Water-Reducible Coating

A coating was prepared by admixing the following materials:

| Raw materials | Parts by Weight |
|---|---|
| Resin Example 3 | 536.73 |
| Defoamer(Byk 024) | 1.20 |
| water | 182.39 |
| benzisothiazolone | 0.20 |
| dispersant (Tamol 165-A) | 9.71 |
| surfactant (Triton CF-10) | 2.49 |
| defoamer (Byk 024) | 1.20 |
| titanium dioxide | 191.78 |
| talc | 49.81 |
| plasticizer (Benzoflex B-50) | 16.44 |
| water | 8.28 |
| (Acrysol RM-2020 thickener) | 6.77 |
| water | 4.33 |
| triethyl amine 98.5% | 2.49 |
| Acrysol RM-825⁶ | 5.98 |

A representative aqueous aerosol coating could be prepared by charging an aerosol container with 46 parts of the above described coating, 11 parts deionized water, 5 parts isopropyl alcohol, 3 parts 2-butoxy ethanol, and 35 parts dimethyl ether.

### Resin Example 4

A reaction vessel equipped as described in Resin Example 1. was charged with 263.8 parts PnB Glycol Ether and heated to 138°C (280°F) and purged with nitrogen. Two separate raw material mixtures, mixture A and mixture B, were prepared.
⁶associative thickener available from Rohm and Haas

| MIXTURE A | |
|---|---|
| Raw materials | Parts by weight |
| methacrylic acid | 248.2 |
| methyl methacrylate | 460.5 |
| 2-ethyl hexyl acrylate | 861.7 |
| t-butyl peroxybenzoate | 55.0 |
| dodecyl mercaptan | 23.1 |

| MIXTURE B | |
|---|---|
| Raw materials | Parts by weight |
| styrene | 655.6 |
| chlorinated polyolefin (CPO 343.3) | 440.4 |

The mixtures were simultaneously added to the reaction vessel at a rate of 9.2 parts per minute for Mixture A and 6.0 parts per minute for Mixture B over a three-hour period. The reaction mixture was then held at the 138°C (280°F) temperature for one-half hour and then, for a two hour period, a mixture of 55.0 parts t-butyl peroxybenzoate and 91.3 parts PnB was added at a rate of 1.2 parts per minute over a two hour period. The reaction mixture was then held at 138°C (280°F) for thirty additional minutes and then allowed to cool.

One thousand five hundred parts of the above reaction product was admixed with a blend of 1776.0 parts deionized water and 84.4 parts triethyl amine which had been heated to 82°C (180°F) in a Kady Mill to form a stable dispersion with an average particle size of about 180 nanometers an NVM of 37.4%, a viscosity of 0.052 Pa·s of (52 cps) as measured with a Brookfield viscometer using a #3 spindle at 60 rpm at 25°C, a pH of 8.4, a weight per 3.785 l (gallon) of 3.86 kg (8.52 pounds) and a calculated VOC of 206.3 grams/liter.

A useful coating composition could be prepared by admixing 25 parts of the stable dispersion described above, 1.89 parts of a latex polymer such as BASF Optive ® 130, along with appropriate additives such as flow agents and defoamers.

## Claims

1. An aqueous polymer solution comprising:
(i) water,
(ii) an acid functional polymer comprising the reaction product obtained by graft copolymerization of:
(a) from 1 to 19% by weight of at least one chlorinated polyolefin;
(b) from 1 to 20% by weight of an unsaturated acid or anhydride;
(c) from 1 to 40% styrene;
(d) from 21 to 97% by weight of at least one other unsaturated monomer copolymerizable with the unsaturated acid or anhydride;
wherein the percentages are based upon the total combined weight of the chlorinated polyolefin and all unsaturated monomers;
(iii) a neutralizing agent in an amount sufficient to provide a stable aqueous dispersion of the acid functional polymer in water.

2. The aqueous polymer solution of claim 1 wherein the acid functional polymer has an acid value of at least 20.

3. The aqueous polymer solution of claim 1 wherein the chlorinated polyolefin is present at a level of 1 to 10% based upon the total combined weight of the chlorinated polyolefin and all unsaturated monomers.

4. The aqueous polymer solution of claim 1 wherein the chlorinated polyolefin is present at a level of 1 to 6% based upon the total combined weight of the chlorinated polyolefin and all unsaturated monomers.

5. The aqueous polymer solution of claim 1 wherein the chlorinated Polyolefin is present at a level of 1 to 4% based upon the total combined weight of the chlorinated polyolefin and all unsaturated monomers.

6. The aqueous polymer solution of claim 1 wherein the aqueous solution comprises an additional water reducible polymer.

7. The aqueous polymer solution of claim 6 wherein the additional water reducible polymer is selected from the group consisting of latexes, acrylics, polyesters, alkyds, and polyurethanes.

8. The aqueous polymer solution of claim 6 or 7 wherein the additional water reducible polymer is present at a level of 1 to 99% by weight of the combined weight of the graft copolymer and the additional polymer.

9. The aqueous polymer solution of claim 8 wherein the additional water reducible polymer is present at a level of 10 to 60% by weight of the combined weight of the graft copolymer and the additional polymer.

10. A water reducible coating composition comprising.
(i) at least one pigment, and
(ii) the aqueous polymer solution of any one of claims 1 to 9,
wherein the coating also comprises at least one organic solvent
present at a level to provide a volatile organic content (VOC) of less than 150 grams per liter at a viscosity of 90 Krebs Units (KU).

11. The coating composition of claim 10 wherein the coating comprises a crosslinking agent reactive with the acid functional polymer.

12. A substrate coated with the coating composition of claim 10.

13. The coated substrate of claim 12 wherein the substrate is a plastic.

14. An aerosol paint product comprising:
(i) a container comprising a can, a valve cup with a valve assembly, a dip tube and an actuator, and
(ii) an aerosol paint composition disposed within said container, said aerosol paint composition comprising:
(a) at least 30 weight percent water,
(b) at least 10 weight percent of the water reducible coating composition of claim 10; and
(c) at least 10 weight percent of an aerosol propellant.

15. A process of coating a substrate, which process comprises:
(i) providing the aerosol paint product of claim 14;
(ii) activating the valve assembly to prepare an aerosol spray of the aerosol paint composition;
(iii) directing the spray to apply the paint composition onto the substrate; and
(iv) allowing the paint composition to cure or dry.

16. The process of claim 15 wherein the substrate is a plastic.

## Patentansprüche

1. Eine wässrige Polymerlösung, umfassend:
(i) Wasser,
(ii) ein säurefunktionelles Polymer, umfassend das Reaktionsprodukt, welches erhalten wird durch Pfropfcopolymerisation von:
(a) 1 bis 19 Gew.-% wenigstens eines chlorierten Polyolefins,
(b) 1 bis 20 Gew.-% einer ungesättigten Säure oder eines ungesättigten Anhydrids,
(c) 1 bis 40% Styrol,
(d) 21 bis 97 Gew.-% wenigstens eines weiteren ungesättigten Monomers, das mit der ungesättigten Säure oder dem ungesättigten Anhydrid copolymerisierbar ist,
wobei die Prozentangaben auf das Gesamtgewicht aus dem chlorierten Polyolefin und allen ungesättigten Monomeren bezogen sind,
(iii) ein Neutralisationsmittel in einer Menge, die ausreicht, um eine stabile wässrige Dispersion des säurefunktionellen Polymers in Wasser zu ergeben.

2. Die wässrige Polymerlösung nach Anspruch 1, wobei das säurefunktionelle Polymer eine Säurezahl von wenigstens 20 besitzt.

3. Die wässrige Polymerlösung nach Anspruch 1, wobei das chlorierte Polyolefin in einer Menge von 1 bis 10% vorliegt, bezogen auf das Gesamtgewicht aus dem chlorierten Polyolefin und allen ungesättigten Monomeren.

4. Die wässrige Polymerlösung nach Anspruch 1, wobei das chlorierte Polyolefin in einer Menge von 1 bis 6% vorliegt, bezogen auf das Gesamtgewicht aus dem chlorierten Polyolefin und allen ungesättigten Monomeren.

5. Die wässrige Polymerlösung nach Anspruch 1, wobei das chlorierte Polyolefin in einer Menge von 1 bis 4% vorliegt, bezogen auf das Gesamtgewicht aus dem chlorierten Polyolefin und allen ungesättigten Monomeren.

6. Die wässrige Polymerlösung nach Anspruch 1, wobei die wässrige Lösung ein zusätzliches wasserverdünnbares Polymer umfasst.

7. Die wässrige Polymerlösung nach Anspruch 6, wobei das zusätzliche wasserverdünnbare Polymer ausgewählt ist aus der Gruppe, bestehend aus Latizes, Acrylpolymeren, Polyestern, Alkydharzen und Polyurethanen.

8. Die wässrige Polymerlösung nach Anspruch 6 oder 7, wobei das zusätzliche wasserverdünnbare Polymer in einer Menge von 1 bis 99 Gew.-% des Gesamtgewichts aus dem Pfropfcopolymer und dem zusätzlichen Polymer vorliegt.

9. Die wässrige Polymerlösung nach Anspruch 8, wobei das zusätzliche wasserverdünnbare Polymer in einer Menge von 10 bis 60 Gew.-% des Gesamtgewichts aus dem Pfropfcopolymer und dem zusätzlichen Polymer vorliegt.

10. Eine wasserverdünnbare Beschichtungszusammensetzung, umfassend:
(i) wenigstens ein Pigment und
(ii) die wässrige Polymerlösung nach einem der Ansprüche 1 bis 9,
wobei die Beschichtung auch wenigstens ein organisches Lösungsmittel umfasst, welches in einer derartigen Menge vorliegt, dass ein Gehalt an flüchtigen organischen Verbindungen (VOC) von weniger als 150 Gramm pro Liter bei einer Viskosität von 90 Krebs-Einheiten (KU) erhalten wird.

11. Die Beschichtungszusammensetzung nach Anspruch 10, wobei die Beschichtung ein Vernetzungsmittel umfasst, das mit dem säurefunktionellen Polymer reaktiv ist.

12. Ein mit der Beschichtungszusammensetzung nach Anspruch 10 beschichtetes Substrat.

13. Das beschichtete Substrat nach Anspruch 12, wobei das Substrat ein Kunststoff ist.

14. Ein Aerosollackprodukt, umfassend:
(i) einen Behälter, der eine Dose, einen Ventilteller mit einer Ventileinrichtung, ein Tauchrohr und eine Betätigungseinrichtung umfasst, und
(ii) eine Aerosollackzusammensetzung, die sich in dem Behälter befindet, wobei die Aerosollackzusammensetzung umfasst:
(a) wenigstens 30 Gew.-% Wasser,
(b) wenigstens 10 Gew.-% der wasserverdünnbaren Beschichtungszusammensetzung nach Anspruch 10 und
(c) wenigstens 10 Gew.-% eines Aerosoltreibmittels.

15. Ein Verfahren zur Beschichtung eines Substrats, wobei das Verfahren umfasst:
(i) Bereitstellen des Aerosollackprodukts nach Anspruch 14,
(ii) Aktivieren der Ventileinheit, um einen Aerosolsprühnebel der Aerosollackzusammensetzung zu erzeugen,
(iii) Lenken des Sprühnebels, so dass die Lackzusammensetzung auf das Substrat aufgetragen wird, und
(iv) Härten- oder Trocknenlassen der Lackzusammensetzung.

16. Das Verfahren nach Anspruch 15, wobei das Substrat ein Kunststoff ist.

## Revendications

1. Solution polymère aqueuse comprenant :
(i) de l'eau ;
(ii) un polymère fonctionnel acide comprenant le produit réactionnel obtenu par copolymérisation avec greffage de :
(a) de 1 à 19 % en poids d'au moins une polyoléfine chlorée ;
(b) de 1 à 20 % en poids d'un acide ou anhydride insaturé ;
(c) de 1 à 40 % de styrène;
(d) de 21 à 97 % en poids d'au moins un autre monomère insaturé copolymérisable avec l'acide ou l'anhydride insaturé ;
les pourcentages étant basés sur le poids combiné total de la polyoléfine chlorée et de tous les monomères insaturés ;
(iii) un agent de neutralisation en une quantité suffisante pour offrir une dispersion aqueuse stable du polymère fonctionnel acide dans l'eau.

2. Solution polymère aqueuse selon la revendication 1, dans laquelle le polymère fonctionnel acide possède un indice d'acidité d'au moins 20.

3. Solution polymère aqueuse selon la revendication 1, dans laquelle la polyoléfine chlorée est présente en une quantité de 1 à 10 % sur la base du poids combiné total de la polyoléfine chlorée et de tous les monomères insaturés.

4. Solution polymère aqueuse selon la revendication 1, dans laquelle la polyoléfine chlorée est présente en une quantité de 1 à 6 % sur la base du poids combiné total de la polyoléfine chlorée et de tous les monomères insaturés.

5. Solution polymère aqueuse selon la revendication 1, dans laquelle la polyoléfine chlorée est présente en une quantité de 1 à 4 % sur la base du poids combiné total de la polyoléfine chlorée et de tous les monomères insaturés.

6. Solution polymère aqueuse selon la revendication 1, dans laquelle la solution aqueuse comprend un polymère réductible dans l'eau additionnel.

7. Solution polymère aqueuse selon la revendication 6, dans laquelle le polymère réductible dans l'eau additionnel est choisi dans le groupe constitué par les latex, les acryliques, les polyesters, les alkydes et les polyuréthanes.

8. Solution polymère aqueuse selon la revendication 6 ou 7, dans laquelle le polymère réductible dans l'eau additionnel est présent en une quantité de 1 à 99 % en poids du poids combiné du copolymère greffé et du polymère additionnel.

9. Solution polymère aqueuse selon la revendication 8, dans laquelle le polymère réductible dans l'eau additionnel est présent en une quantité de 10 à 60 % en poids du poids combiné du copolymère greffé et du polymère additionnel.

10. Composition de revêtement réductible dans l'eau comprenant :
(i) au moins un pigment, et
(ii) la solution polymère aqueuse selon l'une quelconque des revendications 1 à 9,
dans laquelle le revêtement comprend également au moins un solvant organique présent en une quantité fournissant une teneur en composés organiques volatils (COV) inférieure à 150 grammes par litre à une viscosité de 90 unités Krebs (KU).

11. Composition de revêtement selon la revendication 10, dans laquelle le revêtement comprend un agent de réticulation réactif avec le polymère fonctionnel acide.

12. Substrat enduit avec la composition de revêtement de la revendication 10.

13. Substrat enduit selon la revendication 12, dans lequel le substrat est un plastique.

14. Produit pour peinture aérosol comprenant :
(i) un contenant comprenant une boite, un clapet de vanne avec un ensemble de vannes, un tube plongeur et un actionneur ; et
(ii) une composition de peinture aérosol placée dans ledit contenant, ladite composition de peinture aérosol comprenant :
(a) au moins 30 % en poids d'eau ;
(b) au moins 10 % en poids de la composition de revêtement réductible dans l'eau de la revendication 10 ; et
(c) au moins 10 % en poids d'un propulseur d'aérosol.

15. Procédé de revêtement d'un substrat, lequel procédé comprend :
(i) l'utilisation du produit pour peinture aérosol de la revendication 14 ;
(ii) l'activation de l'ensemble de vannes pour préparer une pulvérisation aérosol de la composition de peinture aérosol ;
(iii) l'orientation de la pulvérisation afin d'appliquer la composition de peinture sur le substrat ; et
(iv) le séchage ou le durcissement de la composition de peinture.

16. Procédé selon la revendication 15, dans lequel le substrat est un plastique.
